# EUROPÄISCHE PATENTSCHRIFT

(11) **EP 3 484 759 B1**
(45) Veröffentlichungstag und Bekanntmachung des Hinweises auf die Patenterteilung: **01.09.2021**
(21) Anmeldenummer: 17737772.8
(22) Anmeldetag: 06.07.2017
(51) Int. Cl.: B62D 1/181, B62D 1/184

(54) **LENKSÄULE MIT ELEKTRO-MECHANISCHER FIXIERVORRICHTUNG**
STEERING COLUMN WITH ELECTROMECHANICAL POSITION LOCKING MECHANISM
COLONNE DE DIRECTION AVEC VERROUILLAGE DE POSITION ÉLECTROMÉCANIQUE

(30) Priorität: 14.07.2016 DE 102016008561
(43) Veröffentlichungstag der Anmeldung: 22.05.2019
(73) Patentinhaber: thyssenkrupp Presta AG, 9492 Eschen (LI); thyssenkrupp AG, 45143 Essen (DE)
(72) Erfinder: SPECHT, Jean-Pierre, 9469 Haag (CH); MUNDING, Christoph, 9492 Eschen (LI)
(74) Vertreter: thyssenkrupp Intellectual Property GmbH
(86) Internationale Anmeldenummer: PCT/EP2017/066878
(87) Internationale Veröffentlichungsnummer: WO 2018/011044

(56) Entgegenhaltungen:
- EP-A1- 0 600 700
- DE-A1-102010 039 896

## Beschreibung

Die vorliegende Erfindung betrifft eine verstellbare Lenksäule eines Kraftfahrzeuges mit den Merkmalen des Oberbegriffs des Anspruchs 1 und ein Verfahren mit den Merkmalen des Oberbegriffs des Anspruchs 10.

Verstellbare Lenksäulen dienen zur Anpassung der Position des Lenkrades an die Sitzposition des Fahrers und sind in unterschiedlichen Ausführungsformen bekannt. In vielen Kraftfahrzeugen kann die vertikale Neigung der Lenksäule und/oder der Abstand des Lenkrades zum Fahrer eingestellt werden. Nach dem Einstellen der Lenksäule wird diese in der gewünschten Position fixiert. Hierzu ist eine Vielzahl von Klemmmechanismen für in axialer und/oder vertikaler Richtung verstellbare Lenksäulen von Kraftfahrzeugen bekannt. Da zum Verriegeln des Klemmmechanismus trotz des Einsatzes von Hebelelementen eine hohe Kraft benötigt wird, besteht der Bedarf nach einem elektrisch betätigbaren Mechanismus.

Aus sicherheitstechnischen Gründen ist zudem wichtig, die Stellung des Klemmmechanismus zumindest in der geschlossen Position zu kennen oder zu detektieren.

Die Offenlegungsschrift FR 2 947 233 A1 offenbart einen Klemmmechanismus, der mittels eines elektrischen Betätigungselements aktiviert werden kann. Über einen Rotorpositionssensor des Motors des elektrischen Betätigungselements wird dabei bestimmt, in welchen Zustand sich die Fixiervorrichtung befindet. Nachteilig an dieser Lösung ist es, dass die Überwachung des Motors nur ein Indiz für die Stellung der Klemmvorrichtung ist.

Weiterhin offenbart DE 699 19 639 T2 einen elektrischen Klemmmechanismus, wobei eine bewegliche Nockenscheibe auf einem Schneckenrad drehfest angebracht ist und eine bezüglich der Rotation unbewegliche Nockenscheibe mittels einer Sitzplatte an dem Gehäuse festgelegt ist. Nachteilig sind dabei die hohe Bauteilanzahl und die damit verbunden Kosten. Eine Erkennung des Zustands der Fixiervorrichtung ist nicht vorgesehen.

Aus DE 10 2010 039 896 A1 ist ein gattungsbildendes Lenksäulenmodul mit einer Lenksäule mit Längs- und/oder Querneigungsverstellung bekannt. Das Lenksäulenmodul hat zudem eine Klemmvorrichtung, die mit einer Steuerschaltung verbunden ist und die mit einem Elektromotor für die Betätigung der Klemmvorrichtung zwischen einer normalerweise vorliegenden Klemmstellung und einer Freigabeposition ausgerüstet ist. Bei dem Verfahren wird zunächst die Klemmvorrichtung betätigt, bis diese in der Freigabeposition ist, erst dann erfolgt eine Einstellung der Verstellvorrichtung, bis die gewünschte Längs- und/oder Neigungsverstellung der Lenksäule erreicht ist.

Es ist Aufgabe der vorliegenden Erfindung, eine verstellbare Lenksäule mit einer elektro-mechanischen Fixiervorrichtung anzugeben, die einen kompakten Aufbau aufweist und die sich sicher von einem in den andern Zustand verfahren läßt.

Diese Aufgabe wird von einer Lenksäule mit den Merkmalen des Anspruchs 1 gelöst und einem Verfahren zum Einstellen einer Position einer Lenksäule mit den Merkmalen des Anspruchs 10.

Demnach ist eine Lenksäule für ein Kraftfahrzeug vorgesehen, die in ihrer Längsrichtung und/oder in ihre Höhenrichtung verstellbar ist, umfassend ein Mantelrohr, das eine Lenkspindel drehbar lagert, eine Führungsklammer, die mit der Karosserie des Kraftfahrzeugs verbindbar ist und zwei Seitenwangen aufweist, zwischen denen das Mantelrohr angeordnet ist, eine elektro-mechanische Fixiervorrichtung, in deren Freigabestellung das Mantelrohr gegenüber der Führungsklammer in Längsrichtung und/oder in Höhenrichtung der Lenksäule verstellbar ist und in deren Fixierstellung die eingestellte Position des Mantelrohrs gegenüber der Führungsklammer festgestellt ist, wobei die Fixiervorrichtung einen Spannbolzen, der die Seitenwangen der Führungsklammer durchsetzt und beim Öffnen und Schließen der Fixiervorrichtung mittels eines Elektromotors um seine Achse drehbar ist, und einen Hubmechanismus sowie ein Stützlager umfasst, wobei die Seitenwangen der Führungsklammer und das Mantelrohr zwischen dem Hubmechanismus und dem Stützlager angeordnet sind. Weil der Elektromotor mittels eines verschwenkbar gelagerten Hebels auf den Spannbolzen wirkt, ist die elektro-mechanische Fixiervorrichtung besonders kompakt. Zudem ist ein Sensor vorgesehen, der dazu eingerichtet ist, eine Position des Hebels zu detektieren. Von der Position des Hebels kann unmittelbar auf den Zustand der Fixiervorrichtung geschlossen werden. Somit lässt sich der Zustand der Fixiervorrichtung sicher abfragen. Der Sensor umfasst einen Positionssensor und/oder wenigstens einen Endschalter. Unter Endschalter sind Sensoren zuverstehen, die erkennen, wenn ein bewegter Gegenstand eine bestimmte Position erreicht hat. Ein Positionssensor misst hingegen einen Abstandes zwischen einem Objekt und einem Bezugspunkt.

Beide Sensoren ermöglichen es, die Lage des Hebels und somit den Zustand der Fixiervorrichtung einfach und sicher zu detektieren.

Das Mantelrohr ist dadurch bestimmt, dass es die als Lenkwelle ausgebildete Lenkspindel drehbar aufnimmt oder trägt.

Bevorzugt kann es vorgesehen sein, dass der Elektromotor in einem Gehäuse aufgenommen ist.

In einer Ausführungsform ist der Positionssensor ein Potentiometer mit einem Gesamtwiderstand, wobei der Hebel einen mit dem Hebel entlang eines Verfahrwegs bewegbaren Schleifer aufweist, der durch einen Gleitkontakt den elektrisch festen Gesamtwiderstand mechanisch in zwei diesem Gesamtwiderstand entsprechende Teilwiderstände aufteilt. Durch Verfahren des Hebels mittels des Elektromotors ändert sich der Teilwiderstand und es kann die Lage des Hebels relativ zu einem Bezugspunkt detektiert werden.

Vorzugsweise ist dabei der Schleifer an einem spannbolzenfernen Ende des Hebels angeordnet und weist einen Verfahrweg auf, der sich mindestens von einer Fixierstellung des Spannbolzens in eine Freigabestellung des Spannbolzens erstreckt.

Es kann aber auch vorgesehen sein, dass der wenigstens eine Endschalter eine Lichtschranke aufweist, wobei eine Position des Hebels durch Unterbrechen der Lichtschranke detektiert wird. Ein solcher Absolutsensor kann zusätzlich zum Positionssensor vorgesehen sein, um beispielsweise im Fehlerfall die Detektion des Zustandes der Fixiervorrichtung vorzunehmen. Es können aber auch ausschließlich Endschalter eingesetzt werden. Dabei sind wenigstens zwei Endschalter vorgesehen, um das Erreichen der beiden Zustände, Freigabestellung und Fixierstellung, zu detektieren.

Vorzugsweise weist der Hubmechanismus zwei Hubscheiben auf, wobei eine erste Hubscheibe drehfest mit dem Spannbolzen verbunden ist und eine zweite Hubscheibe auf dem Spannbolzen axial verschieblich in dem Gehäuse geführt ist, und wobei das Gehäuse schwimmend auf der zweiten Hubscheibe gelagert ist. Eine zusätzliche Befestigung des Gehäuses an der Karosserie ist somit nicht notwendig und eine kompakte Bauweise kann ermöglicht werden.

Die zwei Hubscheiben können beispielsweise eine Nockenkontur aufweisen. Es ist ebenfalls denkbar und möglich, dass zwischen den Hubscheiben Wälzkörper oder Kippstifte angeordnet sind.

Der Hubmechanismus kann alternativ auch eine Mutter aufweisen, die mit einem Gewinde auf dem Spannbolzen zusammenwirkt und durch die Verlagerung der Mutter in Richtung der Achse des Spannbolzens einen Klemmhub bereitstellt.

In einer ersten Ausführungsform ist eine Rotorwelle des Elektromotors mit einer Schnecke drehfest verbunden ist, wobei die Schnecke mit einem Schneckenrad kämmt, das drehfest mit der ersten Hubscheibe verbunden ist. Das Schneckenrad bildet dabei den Hebel.

In einer weiteren Ausführungsform weist die Rotorwelle des Elektromotors eine Gewindespindel auf, die mit einer Spindelmutter in Eingriff steht, wobei die Spindelmutter über den Hebel mit dem Spannbolzen drehfest verbunden ist.

Allen Ausführungsformen ist gemein, dass vorzugsweise die beiden Hubscheiben als Hubgetriebe mit dem Stützlager zur Bereitstellung eines Klemmhubs für die Fixierstellung der Fixiervorrichtung zusammenwirken.

Weiterhin ist ein Verfahren zum Einstellen einer Position der vorher beschriebenen Lenksäule in einem Kraftfahrzeug vorgesehen, das folgende Schritte umfasst:
- Nach Betätigen des Fixiermechanismus mittels einer Betätigungseinrichtung zum Einstellen einer Position einer Lenksäule, Verfahren der Fixiervorrichtung in die Freigabestellung mittels des Elektromotors;
- Überprüfen des Zustands der Fixiervorrichtung mittels des Sensors; Falls die Überprüfung ergibt, dass die Fixiervorrichtung sich nicht in der Freigabestellung befindet, Starten eines Diagnoseprozedere; Falls die Überprüfung ergibt, dass die Fixiervorrichtung sich in der Freigabestellung befindet, Warten auf eine Betätigung der Betätigungseinrichtung zum Feststellen der Position der Lenksäule;
- Falls in einer vorbestimmten Zeit eine Betätigung zum Feststellen der Position der Lenksäule nicht detektiert wird, Verfahren der Fixiervorrichtung in die Fixierstellung mittels des Elektromotors;
- Falls in einer vorbestimmten Zeit eine Betätigung zum Feststellen der Position der Lenksäule detektiert wird, Verfahren der Fixiervorrichtung in die Fixierstellung mittels des Elektromotors;
- Überprüfen des Zustands der Fixiervorrichtung mittels des Sensors; Falls die Überprüfung ergibt, dass die Fixiervorrichtung sich nicht in der Fixierstellung befindet, Starten eines Diagnoseprozedere.

Durch dieses Verfahren kann stets sichergestellt werden, dass sich entweder die Fixiervorrichtung in dem gewünschten Zustand befindet oder eine Fehlstellung detektiert wird, was die Sicherheit erhöht.

Bevorzugt umfasst das Diagnoseprozedere folgende Schritte:
- Bestromung des Elektromotors in Richtung der Freigabestellung für eine vordefinierte Dauer und Überwachung des Sensors auf Positionsänderungen;
- Falls die Freigabestellung nicht erreicht wird, Senden eines Fehlersignals an das Kraftfahrzeug und Ansteuern des Motors bis die Fixierstellung erreicht wird; Dabei Überwachen des Sensors auf Positionsänderungen;
- Falls die Fixierstellung nicht erreicht wird, Senden eines zweiten Fehlersignals an das Kraftfahrzeug.

Bevorzugte Ausführungsformen der Erfindung werden nachfolgend anhand der Zeichnungen näher erläutert. Gleichartige oder gleichwirkende Bauteile werden in allen Figuren mit denselben Bezugszeichen bezeichnet. Es zeigen:
- Fig. 1:: eine räumliche Darstellung einer Lenksäule mit elektromechanischer Fixiervorrichtung in Fixierstellung,
- Fig. 2:: eine teilweise Explosionszeichnung der Fixiervorrichtung,
- Fig. 3:: eine perspektivische Detailansicht der Fixiervorrichtung in Fixierstellung,
- Fig. 4:: eine räumliche Darstellung der Fixiervorrichtung in Freigabestellung,
- Fig. 5:: eine seitliche Ansicht der Fixiervorrichtung in Freigabestellung,
- Fig. 6:: einen Schaltkreis mit einem Potentiometer,
- Fig. 7:: einen zweiten Schaltkreis mit einem Potentiometer,
- Fig. 8:: ein Diagramm mit einer gemessenen Spannung eines Potentiometers aufgetragen über einen Verfahrweg,
- Fig. 9:: eine schematische Darstellung eines Verfahrens zur Steuerung der Fixiervorrichtung,
- Fig. 10:: eine räumliche Ansicht einer Lenksäule mit einem Hubmechanismus in einer zweiten Ausführungsform, sowie
- Fig. 11:: eine seitliche Ansicht einer Fixiervorrichtung mit Lichtschranke.

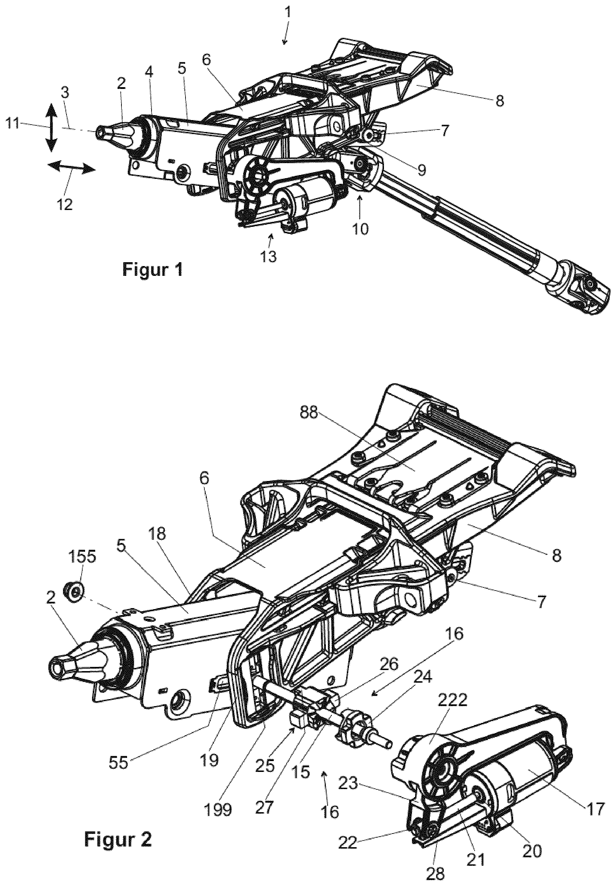

In der Figur 1 ist eine Lenksäule 1 veranschaulicht, die eine Lenkspindel 2 umfasst, die um ihre Drehachse 3 drehbar in einer Lenkspindellagereinheit 4 mit einem Mantelrohr 5 gelagert ist. Das Mantelrohr 5 ist in einer Führungsklammer 6 entlang der Längsachse der Lenkspindel 2 verschiebbar geführt. Das Mantelrohr 5 ist um eine Schwenkachse 7 in der Führungsklammer 6 schwenkbar gelagert. Die Führungsklammer 6 ist durch ein als Konsole ausgebildetes Halteteil 8 gehaltert, wobei sich die Führungsklammer 6 zusammen mit dem Mantelrohr 5 im Fall eines Fahrzeugfrontalaufpralls gegenüber dem Halteteil 8 unter Energieabsorption verlagern kann. Die Energieabsorption erfolgt durch die plastische Deformation eines Deformationselementes, beispielsweise einer Biege-Reiß-Lasche 88. Die Führungsklammer 6 kann auch als Schlitten bezeichnet werden. Das Halteteil 8 kann in Befestigungspunkten 9 an der nicht dargestellten Karosserie eines Kraftfahrzeuges befestigt werden. Die von einem Fahrer über ein (nicht dargestelltes) Lenkrad in die Lenkspindel 2 eingebrachte Drehbewegung wird über ein Kardangelenk 10 und weitere Lenkwellenteile in das nicht dargestellte Lenkgetriebe eingebracht. Zur Erhöhung des Komforts des Fahrers kann die Lenksäule 1 in ihrer Höhe in eine erste Verstellrichtung, auch als Höhenrichtung 11 bezeichnet, und in ihrer Länge in eine zweite Verstellrichtung, auch als Längsrichtung 12 bezeichnet, verstellt werden. Hierzu ist eine Fixiervorrichtung 13 vorgesehen, die einen Spannapparat 14 umfasst.

In einer nicht dargestellten Ausführungsform kann es vorgesehen sein, dass das Mantelrohr als ein Innenmantelrohr ausgebildet ist, welches in einem Außenmantelrohr verschiebbar aufgenommen ist, wobei das Außenmantelrohr durch ein Führungsklammer verschwenkbar getragen ist und die Führungsklammer mit einer Karosserie eines Kraftfahrzeugs verbindbar ist. Mit anderen Worten ist es sowohl möglich, die Führungsklammer direkt mit der Karosserie des Kraftfahrzeugs zu verbinden oder unter Zwischenschaltung eines Halteteils.

Der Spannapparat 14 weist, wie in Figur 2 dargestellt ist, einen Spannbolzen 15, einen Hubmechanismus 16, ein Stützlager 155 und einen Elektromotor 17 auf. Durch Verdrehung des Spannbolzens 15 werden in dieser Ausführungsform zwei Nocken des Hubmechanismus 16 gegeneinander verdreht und die Seitenwangen 18, 19 des Halteteils 8 zusammengezogen, wodurch eine reibschlüssige Verspannung der Seitenwangen 18, 19 des Halteteils 8 mit den Seitenflächen des Mantelrohrs 5 erfolgt. Das Stützlager umfasst ein Axiallager und eine Sechskantmutter mit Innengewinde, die mit einem Gewinde des Spannbolzens 15 koppelbar ist. Das Axiallager ist bevorzugt als Wälzlager ausgebildet und ist zwischen der Seitenwange 18 und der Sechskantmutter angeordnet.

Der Spannbolzen 15 durchsetzt Langlöcher 199 in den Seitenwangen 18, 19 der Führungsklammer und Löcher 55 in den Seitenflächen des Mantelrohrs 5. Der Hubmechanismus 16 ist auf dem elektromotornahen Ende des Spannbolzens 15 und das Stützlager 155 auf dem anderen Ende des Spannbolzens 15 angeordnet. Die Seitenwangen 18, 19 sowie das Mantelrohr 5 sind zwischen dem Hubmechanismus 16 und dem Stützlager 155 angeordnet.

Durch Drehen des Spannbolzens 15 kann die Fixiervorrichtung wahlweise in eine Freigabestellung, auch geöffnete Stellung genannt, oder eine Fixierstellung, auch geschlossene Stellung genannt, umgeschaltet werden. In der Freigabestellung kann die Lenkspindel 2, beziehungsweise das daran befestigte Lenkrad (nicht dargestellt in den Figuren) in ihrer Position verstellt werden, insbesondere in der Längsrichtung und der Höhen- oder Neigungsrichtung verschoben werden. In der Fixierstellung der Fixiervorrichtung 13 ist das Mantelrohr 5 in seiner Position zur Führungsklammer 6 fixiert.

Der Elektromotor 17 weist eine Rotorwelle 20 mit einer Gewindespindel 21 auf, die mit einer Spindelmutter 22 in Wirkeingriff steht. Die Spindelmutter 22 ist mit einem Hebel 23 verbunden, der mit einer ersten Nockenscheibe 24 drehfest verbunden ist, die mit einer zweiten Nockenscheibe 25 als Hubgetriebe zur Bereitstellung eines Klemmhubs zusammenwirkt. Die Spindelmutter 22 ist verschwenkbar um eine Achse, die orthogonal zur Längsachse der Gewindespindel 21 orientiert ist, mit dem Hebel 23 verbunden. Der Elektromotor 17 und der Hebel 23 sind in einem Gehäuse angeordnet. Die zweite Nockenscheibe 25 weist zwei aus einer im Wesentlichen runden Grundform radial hervorstehende und sich diametral gegenüberliegende Ansätze 26 auf und zwei in Richtung der Führungsklammer 6 vorstehende Vorsprünge 27. Das Gehäuse 222 weist eine Ausnehmung zur Durchführung des Spannbolzens 15 auf, die so ausgeformt ist, dass sie eine Führung für die zweite Nockenscheibe 25 ausschließlich in Axialrichtung bildet. Eine Verdrehung der zweiten Nockenscheibe 25 mit dem Spannbolzen 15 ist somit ausgeschlossen. Das Gehäuse 222 der elektro-mechanischen Fixiervorrichtung 13 ist schwimmend auf der zweiten Nockenscheibe 25 gelagert und kann sich während der Überführung zwischen der Fixierstellung und der Freigabestellung axial auf dem Spannbolzen 15 und der zweiten Nockenscheibe 25 bewegen. Der Elektromotor 17 ist auf einer gewindespindelfernen Seite mittels eines Gelenks 223 an dem Gehäuse 222 gehaltert. Dieses Gelenk 223 ist erforderlich, um einen Winkelausgleich, der bei der Betätigung des Hebels 23 auftritt, auszugleichen.

Die Spindelmutter 22 wird mittels des Elektromotors 17 auf der Gewindespindel entlang einer Längsachse verfahren. Der Hebel 23 ist mit der Spindelmutter 22 verbunden. Ein Verfahren der Spindelmutter 22 verschwenkt den Hebel 23 um eine Schwenkachse, die mit einer Längsachse des Spannbolzens zusammenfällt. Der Hebel ist mit dem Spannbolzen derart verbunden, dass ein Verschwenken des Hebels 23 eine Rotation des Spannbolzens 15 bewirkt. Weiterhin ist eine Detektionseinrichtung 28 vorgesehen, die die Stellung des Hebels 23 und somit den Zustand der Fixiereinrichtung detektiert. Die Detektionseinrichtung 28 kann ein Potentiometer oder einen Endschalter, beispielsweise eine Lichtschranke ausweisen. Eine Elektronik steuert sicherheitsrelevante Zustände der Klemmung.

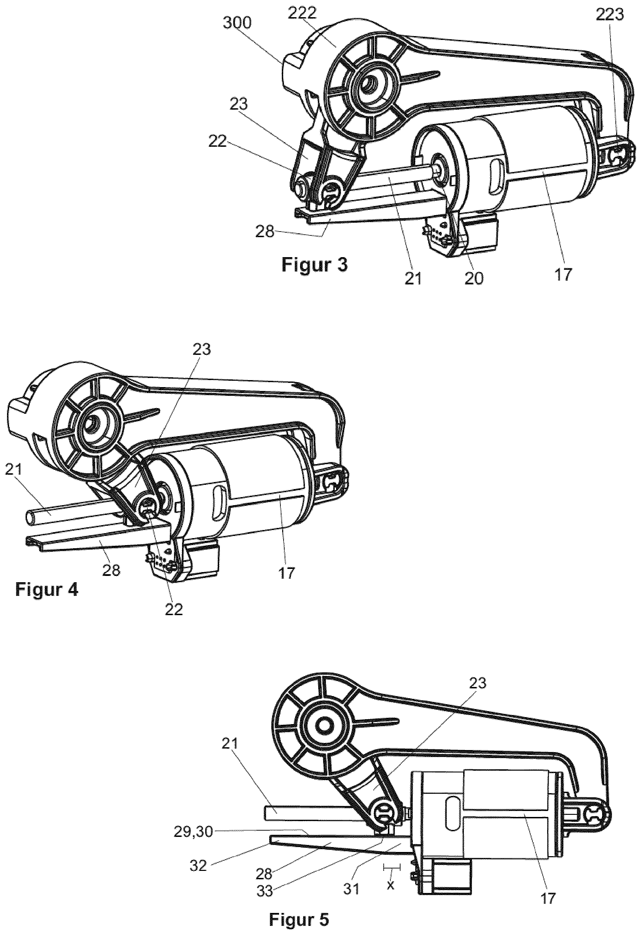

In den Figuren 3 und 4 sind die Fixerstellung und die Freigabestellung der Fixiervorrichtung im Detail dargestellt.

Durch ein Verschwenken des Hebels 23 bzw. einer Drehung des Spannbolzens 15 wird die damit drehfest verbundene erste Nockenscheibe 24 gegenüber der zweiten Nockenscheibe 25 verdreht. Durch das Zusammenspiel der beiden Nockenscheiben 24, 25 verändert sich der Abstand zwischen dem Hebel 23 und dem Mantelrohr 5. In dem Übergang zur Fixierstellung wird der Abstand vergrößert, in dem die beiden Nockenscheiben 24, 25 auseinander gedreht werden und sich somit die Tiefe der beiden Bauteile vergrößert, so dass die zweite Nockenscheibe 25 aus der Ausnehmung 300 des Gehäuses 222 heraus gedrückt wird und sich an der Seitenwange 19 der Führungsklammer 6 abstützt und dabei das Stützlager 155 gegen die gegenüberliegende Seitenwange 18 der Führungsklammer 6 zieht. Die Fixiervorrichtung ist nun so verspannt, dass die Seitenwangen 18, 19 der Führungsklammer 6 zusammengezogen sind, wodurch eine reibschlüssige Verspannung der Seitenwangen 18, 19 mit den Seitenflächen des Mantelrohrs 5 erfolgt. Der Abstand zwischen der Fixiervorrichtung 13 weist einen höheren Wert in der Fixierstellung als in der Freigabestellung auf, da die Seitenwangen 18, 19 zusammengezogen sind. Die Stellung des Hebels 23 wird mittels der Detektionseinrichtung 28 gemessen.

Bei dem Übergang in die Freigabestellung, siehe Figur 4, wird die erste Nockenscheibe 24 gegenüber der zweiten Nockenscheibe 25 verdreht, bis die beiden Bauteile ineinander greifen und sich ihre Tiefe verringert. Dadurch verschiebt sich die zweite Nockenscheibe 25 im Gehäuse 222 axial in Richtung des Hebels 23 und das Stützlager 155 löst sich von den Seitenwangen 18,19 . Die Verspannung der Fixiervorrichtung 13 ist somit gelöst und das Mantelrohr 5 der Lenksäule 1 ist zur Verstellung freigegeben.

In der Seitenansicht der Figur 5 ist ein Ausführungsbeispiel der Detektionseinrichtung 28 dargestellt. Es ist ein Potentiometer 28 als Positionssensor vorgesehen, der die Stellung des Hebels 23 entlang eines Hebelwegs relativ zu einer Bezugsposition erfasst. Das Potentiometer 28 weist einen ohmschen Widerstand mit einem verschiebbaren Abgriff auf, an dem ein variabler Teilwiderstand abgegriffen werden kann. Der Gesamtwiderstand repräsentiert den Messbereich über den eine Positionsmessung möglich ist. Damit die Verschiebeposition des Potentiometers in eine Signalgröße umgesetzt werden kann, wird an dem Potentiometer eine Spannung U0 angelegt. Am Abgriff des Potentiometers mit dem Teilwiderstand Rx ist dann eine dem Weg x proportionale Spannung Ux messbar. Die Positionsinformation wird demnach durch das Potentiometer zuerst mechanisch in einen proportionalen ohmschen Widerstand umgesetzt und anschließend in ein proportionales elektrisches Spannungssignal gewandelt.

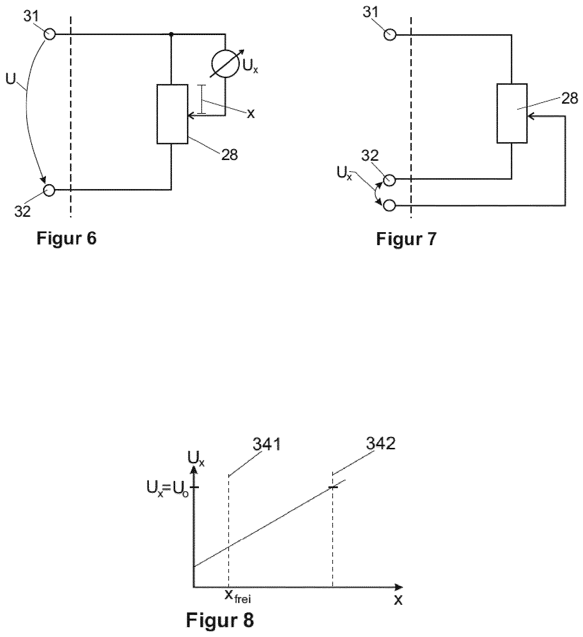

Dazu weist der Positionssensor einen Träger mit einer auf einer Oberfläche 30 aufgebrachten Widerstandsschicht 29 auf. Dieser Träger ist mit seiner Oberfläche 30 parallel zur Rotorwelle 21 des Elektromotors 17 fest angeordnet und weist zwei elektrische Anschlüsse an einem elektromotornahen Ende 31 und einem elektromotorfernen Ende 32 des Hebelwegs auf. Mit dem Hebel 23 ist ein bewegbarer Schleifer 33 fest verbunden, der durch einen Gleitkontakt den elektrisch festen Gesamtwiderstand des Trägers mechanisch in zwei, in Summe diesem Gesamtwiderstand entsprechende Teilwiderstände aufteilt und einen Abgriff darstellt. Eine Widerstandsänderung ist detektierbar, indem ein Spannungsmessgerät (Voltmeter), wie in Figur 6 dargestellt, parallel zum Potentiometer geschaltet wird. Die gemessene Spannung Ux ist ein Maß für die relative Position x des Schleifers in Bezug auf die Enden 31, 32. In Figur 7 ist eine zweite mögliche Schaltung dargestellt, bei der die zwischen der Erdung und dem Abgriff anliegende Spannung Ux gemessen wird. Der Sensor wird kalibriert, um einer bestimmten Spannung Ux eine bestimmte Lage x zuordnen zu können. Dazu werden die Anschläge des Verfahrwegs des Hebels (Hebelweg) angefahren und die gemessenen Spannungswerte Ux dem zurückgelegten Weg x zugeordnet. Diese einmalige Initialisierung wird bevorzugt auf der Montageanlage durchgeführt und die gemessenen Werte werden gespeichert. Daher ist im Regelfall keine Initialisierung im Auto mehr notwendig. Bei einer Verwendung eines solchen Absolutlängenmessystems kann die Verfahrgeschwindigkeit der Fixiervorrichtung gesteuert oder geregelt werden.

Wie in Figur 8 dargestellt ist, wird anhand der gemessenen Spannung Ux bestimmt, in welchem Zustand sich die Fixiervorrichtung befindet. Das Diagramm zeigt die gemessene Spannung Ux aufgetragen gegen den Verfahrweg x. Der Weg x ist der Verfahrweg des spannbolzenfernen Endes des Hebels 23 vom elektromotornahen Ende 31 zu dem elektromotorfernen Ende 32. In der Fixierstellung 342 befindet sich der Hebel am motorfernen Anschlag, bzw. in dessen Nähe und die gemessene Spannung Ux entspricht annähernd U0, der Spannung des Gesamtwiderstandes. In der Freigabestellung 341 befindet sich der Hebel an einer Position bei x>= x_{frei}, wobei x_{frei} der Schwellenwert ist, ab dem die Lenksäule zur Verstellung freigegeben ist. Sollte es zu einer Störung kommen, beispielsweise dass der Schleifer 33 die Oberfläche 30 nicht mehr in einem ausreichenden Maße kontaktiert, so steigt der vorliegende ohmsche Wiederstand quasi gegen Unendlich, so dass die messbare Spannung auf nahezu Null absinkt. Liegt ein solcher Fall vor, d.h. dass die Spannung geringer ist als in der Freigabestellung 341, so liegt eine Störung vor. Durch die erfindungsgemäße Anordnung ist somit eine Störung auf einfache Weise feststellbar.

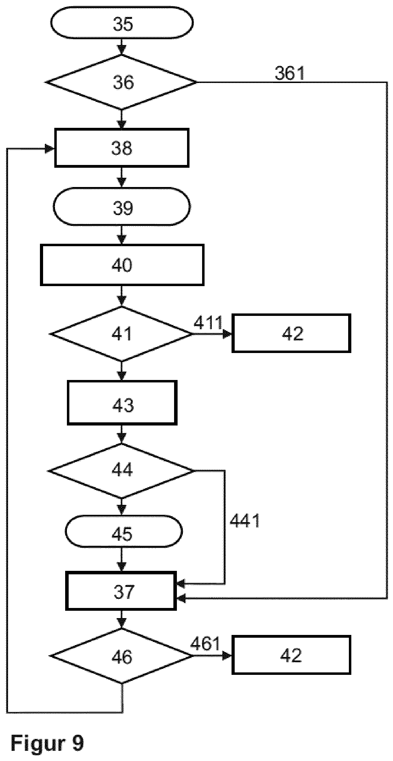

In der Figur 9 ist ein Flussdiagramm dargestellt, dass ein Verfahren zum Betreiben der elektrischen Fixiervorrichtung zeigt.

Die Fixiervorrichtung wird in einem ersten Schritt 35 mit dem Bordnetz des Fahrzeuges verbunden. Danach wird der Zustand der Fixiervorrichtung abgefragt 36. Befindet sich die Fixiervorrichtung in der Freigabestellung 361, so wird der Motor angesteuert, um die Vorrichtung in die Fixierstellung zu verfahren 37. Befindet sich die Fixiervorrichtung in der Fixierstellung, so wird darauf gewartet, das der Fahrer den Fixiermechanismus zum Verfahren der Lenksäule betätigt 38. Wird eine solche Betätigung detektiert 39, beispielswiese durch Drücken eines Betätigungsknopfes, verfährt der Elektromotor die Fixiervorrichtung in die Freigabestellung 40. Danach wird der Zustand der Fixiervorrichtung erneut überprüft 41. Wenn die Abfrage ergibt, dass die Fixiervorrichtung sich nicht in der Freigabestellung befindet 411, wird ein Diagnoseprozedere gestartet 42. Ergibt die Abfrage hingegen, dass sich die Fixiervorrichtung in der Freigabestellung befindet, wird auf ein Signal des Fahrers zum erneuten Fixieren der Vorrichtung gewartet 43. Dafür ist eine bestimmte Zeit vorgesehen. Wird diese Zeit überschritten 44, so wird der Elektromotor ohne ein Signal des Fahrers zum Fixieren der Vorrichtung angesteuert 441, 37. Kommt innerhalb der Zeitspanne das Signal des Fahrers zum Fixieren 45, wird daraufhin ebenfalls der Motor angesteuert, um die Vorrichtung in die Fixierstellung zu verfahren 37. Danach wird erneut der Zustand der Vorrichtung abgefragt 46. Ergibt die Abfrage, dass sich die Vorrichtung nicht in der Fixierstellung befindet 461, so wird erneut das Diagnoseprozedere 42 gestartet, ansonsten beginnt der Ablauf von vorne und es wird auf ein Signal zum Öffnen der Vorrichtung vom Fahrer gewartet 38.

Das Diagnoseprozedere umfasst folgende Verfahrensschritte:
- Bestromung des Motors in Richtung der Freigabestellung für eine vordefinierte Dauer (insbesondere 20s) und Überwachung des Positionssensors auf Positionsänderungen;
- Falls die Freigabestellung nicht erreicht wird, Senden eines Fehlersignals an das Fahrzeug und Ansteuern des Motors bis die Fixierstellung erreicht wird; Dabei wird der Positionssensor auf Positionsänderungen überwacht;
- Falls die Fixierstellung nicht erreicht wird, Senden eines zweiten Fehlersignals (critical error) an das Fahrzeug.

Es kann weiterhin vorgesehen sein, dass die Fixierstellung durch einen zusätzlichen Absolutsensor, beispielsweise einem Endlagensensor, überwacht wird.

Das zweite Fehlersignal wird vom Fahrzeug bevorzugt so weiterverarbeitet, dass eine Warnleuchte bzw. ein vorhandenes Display den Fahrer über den Zustand der Fixiervorrichtung informiert.

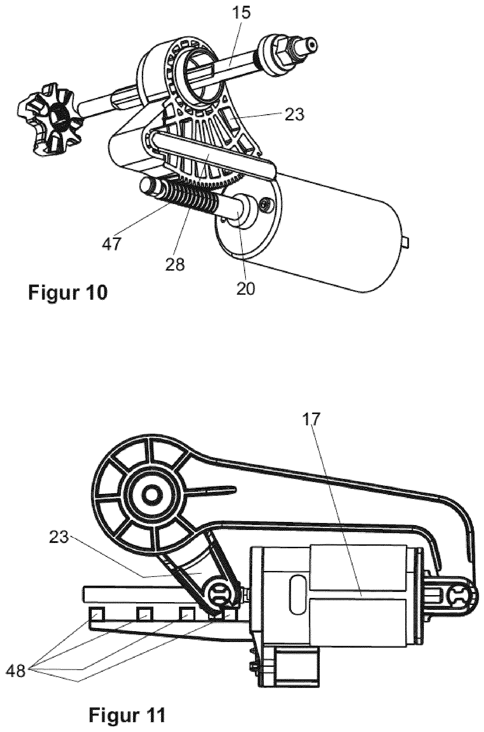

In einer weiteren Ausführungsform der Figur 10, ist der Hebel 23 durch ein segmentartig ausgebildetes Schneckenrad gebildet. Eine Schnecke 47 ist mit der Rotorwelle 20 drehfest verbunden ist. Dabei sind die Rotorwelle 20 und die Schnecke 47 senkrecht zum Spannbolzen 15 angeordnet. Die Schnecke 47 kämmt mit dem kreissektorförmigen Schneckenrad 23, welches um die Drehachse des Spannbolzens 15 verschwenkbar gelagert ist. Das Schneckenrad 23 ist mit der ersten Klemmscheibe wirkverbunden. Der Positionssensor 28 misst die Lage des Hebels 23 entlang des Hebelwegs.

In der Figur 11 ist eine mögliche Ausführungsform mit einer Vielzahl an Lichtschranken 48 dargestellt. Der Hebel 23 bewegt sich von der Fixierstellung in die Freigabestellung und vice versa durch die Lichtschranken 48 hindurch, wodurch die Lage des Hebels 28 durch Detektion der Unterbrechung der Lichtschranken bestimmt werden kann. Es kann vorgesehen sein, eine Vielzahl an Lichtschranken einzusetzen. Es ist aber auch möglich Lichtschranken als Endschalter zu verwenden, die nur in den Endbereichen des Hebelweges angeordnet sind und somit nur das Erreichen einer Fixierstellung oder Freigabestellung detektieren. Bei der Anordnung mehreren Lichtschranken im Bereich der Fixierstellung lässt sich die Klemmkraft einstellen.

Die erfindungsgemäße verstellbare Lenksäule 1 weist eine elektro-mechanische Fixiervorrichtung 13 auf, bei der die Stellung des Hebels gegenüber dem Gehäuse zur Bestimmung der Lage des Klemmhebels gemessen wird. Dadurch lässt sich die Sicherheit erhöhen, weil Funktionsfehler frühzeitig erkannt werden können. Vorzugsweise ist das Gehäuse der Fixiervorrichtung dabei schwimmend auf der zweiten Nockenscheibe gelagert und kann sich in Axialrichtung des Spannbolzens bewegen. Eine zusätzliche Befestigung des Gehäuses an der Karosserie ist somit nicht notwendig und eine kompakte Bauweise kann ermöglicht werden. Eine gewünschte Modularität der Fixiervorrichtung kann durch verschiedene Gewindesteigungen und Hebellängen realisiert werden. Ebenfalls ist es denkbar und möglich, dass das Gewinde ein- oder mehrgängig ausgeführt ist.

## Patentansprüche

1. Lenksäule (1) für ein Kraftfahrzeug, die in ihrer Längsrichtung (12) und/oder in ihrer Höhenrichtung (11) verstellbar ist, umfassend
- ein Mantelrohr (5), das eine Lenkspindel (2) drehbar lagert,
- eine Führungsklammer (6), die mit der Karosserie des Kraftfahrzeugs direkt oder indirekt verbindbar ist und zwei Seitenwangen (18, 19) aufweist, zwischen denen das Mantelrohr (5) angeordnet ist,
- eine elektro-mechanische Fixiervorrichtung (13), in deren Freigabestellung das Mantelrohr (5) gegenüber der Führungsklammer (6) in Längsrichtung (12) und/oder in Höhenrichtung (11) der Lenksäule (1) verstellbar ist und in deren Fixierstellung die eingestellte Position des Mantelrohrs (5) gegenüber der Führungsklammer (6) festgestellt ist, wobei die Fixiervorrichtung (13)
- einen Spannbolzen (15), der die Seitenwangen (18, 19) der Führungsklammer (6) durchsetzt und beim Öffnen und Schließen der Fixiervorrichtung (13) mittels eines Elektromotors (17) um seine Achse drehbar ist, und
- einen Hubmechanismus (16) sowie ein Stützlager umfasst, wobei die Seitenwangen (18, 19) der Führungsklammer (6) und das Mantelrohr (5) zwischen dem Hubmechanismus (16) und dem Stützlager angeordnet sind, wobei der Elektromotor (17) mittels eines verschwenkbar gelagerten Hebels (23) auf den Spannbolzen (15) wirkt, **dadurch gekennzeichnet, dass** ein Sensor (28, 48) vorgesehen ist, der dazu eingerichtet ist, eine Position des Hebels (23) zu detektieren, wobei der Sensor ein Potentiometer als Positionssensor (28) umfasst, der die Stellung des Hebels (23) entlang eines Hebelwegs relativ zu einer Bezugsposition erfasst und/oder der Sensor wenigstens einen Endschalter (48) umfasst, der erkennt, wenn der Hebel (23) als bewegter Gegenstand eine bestimmte Position erreicht hat.

2. Lenksäule nach Anspruch 1, **dadurch gekennzeichnet, dass** das Potentiometer einen Gesamtwiderstand aufweist und der Hebel (23) einen mit dem Hebel (23) entlang eines Verfahrwegs bewegbaren Schleifer (33) aufweist, der durch einen Gleitkontakt den elektrisch festen Gesamtwiderstand mechanisch in zwei diesem Gesamtwiderstand entsprechende Teilwiderstände aufteilt.

3. Lenksäule nach Anspruch 2, **dadurch gekennzeichnet, dass** der Schleifer (33) an einem spannbolzenfernen Ende des Hebels (23) angeordnet ist und einen Verfahrweg aufweist, der sich mindestens von einer Fixierstellung des Spannbolzens (15) in eine Freigabestellung des Spannbolzens (15) erstreckt.

4. Lenksäule nach einem der vorhergehenden Ansprüche, **dadurch gekennzeichnet, dass** der wenigstens eine Endschalter (48) eine Lichtschranke aufweist, wobei eine Position des Hebels (23) durch Unterbrechen der Lichtschranke detektiert wird.

5. Lenksäule nach einem der vorhergehenden Ansprüche, **dadurch gekennzeichnet, dass** der Hubmechanismus (16) zwei Hubscheiben (24, 25) aufweist, wobei eine erste Hubscheibe (24) drehfest mit dem Spannbolzen (15) verbunden ist und eine zweite Hubscheibe (25) auf dem Spannbolzen (15) axial verschieblich in dem Gehäuse geführt ist, und wobei das Gehäuse schwimmend auf der zweiten Hubscheibe (25) gelagert ist.

6. Lenksäule nach einem der vorhergehenden Ansprüche, **dadurch gekennzeichnet, dass** eine Rotorwelle (21) des Elektromotors (18) mit einer Schnecke (22) drehfest verbunden ist, wobei die Schnecke (22) mit einem Schneckenrad (23) kämmt, das drehfest mit der ersten Hubscheibe (24) verbunden ist.

7. Lenksäule nach einem der vorhergehenden Ansprüche 1 bis 5, **dadurch gekennzeichnet, dass** eine Rotorwelle (20) des Elektromotors (18) eine Gewindespindel (21) aufweist, die mit einer Spindelmutter (22) in Eingriff steht, wobei die Spindelmutter (22) über den Hebel (23) mit dem Spannbolzen (15) drehfest verbunden ist.

8. Lenksäule nach einem der vorhergehenden Ansprüche, **dadurch gekennzeichnet, dass** die beiden Hubscheiben (24, 25) als Hubgetriebe mit dem Stützlager zur Bereitstellung eines Klemmhubs für die Fixierstellung der Fixiervorrichtung (13) zusammenwirken.

9. Verfahren zum Einstellen einer Position einer Lenksäule in einem Kraftfahrzeug, die Lenksäule umfassend
- ein Mantelrohr (5), das eine Lenkspindel (2) drehbar lagert,
- eine Führungsklammer (6), das mit der Karosserie des Kraftfahrzeugs direkt oder indirekt verbindbar ist und zwei Seitenwangen (19, 20) aufweist, zwischen denen das Mantelrohr (5) angeordnet ist,
- eine elektro-mechanische Fixiervorrichtung (13) mit einer Betätigungseinrichtung, in deren Freigabestellung das Mantelrohr (5) gegenüber der Führungsklammer (6) in Längsrichtung (12) und/oder in Höhenrichtung (11) der Lenksäule (1) verstellbar ist und in deren Fixierstellung die eingestellte Position des Mantelrohrs (5) gegenüber der Führungsklammer (6) festgestellt ist, wobei die Fixiervorrichtung (13)
- einen Spannbolzen (15), der die Seitenwangen (18, 19) der Führungsklammer (6) durchsetzt und beim Öffnen und Schließen der Fixiervorrichtung (13) mittels angeordneten Elektromotors (17) um seine Achse drehbar ist, und
- einen Hubmechanismus (16) sowie ein Stützlager umfasst, wobei die Seitenwangen (18, 19) der Führungsklammer (6) und das Mantelrohr (5) zwischen dem Hubmechanismus (16) und dem Stützlager angeordnet sind, wobei der Elektromotor (17) mittels eines verschwenkbar gelagerten Hebels (23) auf den Spannbolzen (15) wirkt, und wobei ein Sensor vorgesehen ist, der dazu eingerichtete ist, eine Position des Hebels (23) zu detektieren, wobei das Verfahren folgende Schritte umfasst:
- Nach Betätigen des Fixiermechanismus mittels der Betätigungseinrichtung zum Einstellen einer Position einer Lenksäule (38, 39), Verfahren der Fixiervorrichtung in die Freigabestellung mittels des Elektromotors (40); **dadurch gekennzeichnet, dass** das Verfahren folgende weitere Schritte umfasst
- Überprüfen des Zustands der Fixiervorrichtung mittels des Sensors (41); Falls die Überprüfung ergibt, dass die Fixiervorrichtung sich nicht in der Freigabestellung befindet (41'), Starten eines Diagnoseprozedere (42); Falls die Überprüfung ergibt, dass die Fixiervorrichtung sich in der Freigabestellung befindet, Warten auf eine Betätigung der Betätigungseinrichtung zum Feststellen der Position der Lenksäule (43);
- Falls in einer vorbestimmten Zeit eine Betätigung zum Feststellen der Position der Lenksäule nicht detektiert wird (44), Verfahren der Fixiervorrichtung in die Fixierstellung mittels des Elektromotors (44', 37);
- Falls in einer vorbestimmten Zeit eine Betätigung zum Feststellen der Position der Lenksäule detektiert wird (45), Verfahren der Fixiervorrichtung in die Fixierstellung mittels des Elektromotors (37);
- Überprüfen des Zustands der Fixiervorrichtung mittels des Sensors (46); Falls die Überprüfung ergibt, dass die Fixiervorrichtung sich nicht in der Fixierstellung befindet (46'), Starten eines Diagnoseprozedere (42).

10. Verfahren nach Anspruch 9, **dadurch gekennzeichnet, dass** das Diagnoseprozedere (42) folgende Schritte umfasst:
- Bestromung des Elektromotors in Richtung der Freigabestellung für eine vordefinierte Dauer und Überwachung des Sensors auf Positionsänderungen;
- Falls die Freigabestellung nicht erreicht wird, Senden eines Fehlersignals an das Kraftfahrzeug und Ansteuern des Motors bis die Fixierstellung erreicht wird; Dabei Überwachen des Sensors auf Positionsänderungen;
- Falls die Fixierstellung nicht erreicht wird, Senden eines zweiten Fehlersignals an das Kraftfahrzeug.

11. Verfahren nach Anspruch 9 oder 10, **dadurch gekennzeichnet, dass** der Sensor einen Positionssensor (28) und/oder wenigstens einen Endschalter (48) umfasst.

12. Verfahren nach Anspruch 11, **dadurch gekennzeichnet, dass** der Positionssensor (28) ein Potentiometer mit einem Gesamtwiderstand aufweist, wobei der Hebel (23) einen mit dem Hebel (23) bewegbaren Schleifer (33) aufweist, der durch einen Gleitkontakt den elektrisch festen Gesamtwiderstand mechanisch in zwei diesem Gesamtwiderstand entsprechende Teilwiderstände aufteilt.

13. Verfahren nach Anspruch 12, **dadurch gekennzeichnet, dass** der Schleifer (33) an einem spannbolzenfernen Ende des Hebels (23) angeordnet ist und einen Verfahrweg aufweist, der sich mindestens von einer Fixierstellung des Spannbolzens (15) in eine Freigabestellung des Spannbolzens (15) erstreckt.

14. Verfahren nach einem der Ansprüche 9 bis 13, **dadurch gekennzeichnet, dass** der Hubmechanismus (16) zwei Hubscheiben (24, 25) aufweist, wobei eine erste Hubscheibe (24) drehfest mit dem Spannbolzen (15) verbunden ist und eine zweite Hubscheibe (25) auf dem Spannbolzen (15) axial verschieblich in dem Gehäuse geführt ist, und wobei das Gehäuse schwimmend auf der zweiten Hubscheibe (25) gelagert ist.

## Claims

1. A steering column (1) for a motor vehicle, which steering column is adjustable in its longitudinal direction (12) and/or in its vertical direction (11), comprising
- a casing tube (5) which serves for rotatably mounting a steering spindle (2),
- a guide bracket (6) which is directly or indirectly connectable to the body of the motor vehicle and which comprises two side cheeks (18, 19) between which the casing tube (5) is arranged,
- an electromechanical fixing device (13), in the release position of which the casing tube (5) is adjustable relative to the guide bracket (6) in the longitudinal direction (12) and/or in the vertical direction (11) of the steering column (1), and in the fixing position of which the set position of the casing tube (5) is fixed relative to the guide bracket (6), wherein the fixing device (13) comprises
- a clamping bolt (15) which extends through the side cheeks (18, 19) of the guide bracket (6) and which, during the opening and closing of the fixing device (13), is rotatable about its axis by means of an electric motor (17), and
- a stroke-generating mechanism (16) and a support bearing, wherein the side cheeks (18, 19) of the guide bracket (6) and the casing tube (5) are arranged between the stroke-generating mechanism (16) and the support bearing, wherein the electric motor (17) acts via a pivotably mounted lever (23) on the clamping bolt (15), **characterized in that** a sensor (28, 48) is provided which is designed to detect a position of the lever (23), wherein the sensor comprises a potentiometer (28) as position sensor, which detects the position of the lever (23) along a lever travel relative to a reference position and/or the sensor comprises at least one limit switch (48), which identifies when the lever (23) as a moving object has reached a particular position.

2. The steering column as claimed in claim 1, **characterized in that** the position sensor (28) comprises a potentiometer with a total resistance, wherein the lever (23) comprises a slider (33) which is movable with the lever (23) along a movement travel and which, by means of a sliding contact, mechanically divides the electrically fixed total resistance into two partial resistances that correspond to said total resistance.

3. The steering column as claimed in claim 2, **characterized in that** the slider (33) is arranged on an end of the lever (23) remote from the clamping bolt and comprises a movement travel which extends at least from a fixing position of the clamping bolt (15) into a release position of the clamping bolt (15).

4. The steering column as claimed in any of the preceding claims, **characterized in that** the at least one limit switch (48) comprises a light barrier, wherein a position of the lever (23) is detected by interruption of the light barrier.

5. The steering column as claimed in any of the preceding claims, **characterized in that** the stroke-generating mechanism (16) comprises two stroke-generating disks (24, 25), wherein a first stroke-generating disk (24) is connected rotationally conjointly to the clamping bolt (15) and a second stroke-generating disk (25) is guided on the clamping bolt (15) in axially displaceable fashion in the housing, and wherein the housing is mounted in floating fashion on the second stroke-generating disk (25).

6. The steering column as claimed in any of the preceding claims, **characterized in that** a rotor shaft (21) of the electric motor (18) is connected rotationally conjointly to a worm (22), wherein the worm (22) meshes with a worm wheel (23) which is connected rotationally conjointly to the first stroke-generating disk (24).

7. The steering column as claimed in any of the preceding claims 1 to 5, **characterized in that** a rotor shaft (20) of the electric motor (18) comprises a threaded spindle (21) which engages with a spindle nut (22), wherein the spindle nut (22) is connected rotationally conjointly via the lever (23) to the clamping bolt (15).

8. The steering column as claimed in any of the preceding claims, **characterized in that** the two stroke-generating disks (24, 25) as stroke-generating gearing interact with the support bearing in order to provide a clamping stroke for the fixing position of the fixing device (13).

9. A method for setting a position of a steering column in a motor vehicle, the steering column comprising
- a casing tube (5) which serves for rotatably mounting a steering spindle (2),
- a guide bracket (6) which is directly or indirectly connectable to the body of the motor vehicle and which comprises two side cheeks (19, 20) between which the casing tube (5) is arranged,
- an electromechanical fixing device (13) with an actuating device, in the release position of which the casing tube (5) is adjustable relative to the guide bracket (6) in the longitudinal direction (12) and/or in the vertical direction (11) of the steering column (1), and in the fixing position of which the set position of the casing tube (5) is fixed relative to the guide bracket (6), wherein the fixing device (13) comprises
- a clamping bolt (15) which extends through the side cheeks (18, 19) of the guide bracket (6) and which, during the opening and closing of the fixing device (13), is rotatable about its axis by means of an arranged electric motor (17), and
- a stroke-generating mechanism (16) and a support bearing, wherein the side cheeks (18, 19) of the guide bracket (6) and the casing tube (5) are arranged between the stroke-generating mechanism (16) and the support bearing, wherein the electric motor (17) acts via a pivotably mounted lever (23) on the clamping bolt (15), and wherein a sensor is provided which is designed to detect a position of the lever (23), wherein the method comprises the following steps:
- after actuation of the fixing mechanism by means of the actuating device in order to set a position of a steering column (38, 39), moving the fixing device into the release position by means of the electric motor (40);
**characterized in that** the method comprises the following further steps:
- checking the state of the fixing device by means of the sensor (41); if the check yields that the fixing device is not situated in the release position (41'), starting a diagnostic procedure (42); if the check yields that the fixing device is situated in the release position, waiting for an actuation of the actuating device for the purposes of immobilizing the position of the steering column (43);
- if an actuation for the purposes of immobilizing the position of the steering column is not detected in a predetermined time (44), moving the fixing device into the fixing position by means of the electric motor (44', 37);
- if an actuation for the purposes of immobilizing the position of the steering column is detected in a predetermined time (45), moving the fixing device into the fixing position by means of the electric motor (37);
- checking the state of the fixing device by means of the sensor (46); if the check yields that the fixing device is not situated in the fixing position (46'), starting a diagnostic procedure (42).

10. The method as claimed in claim 9, **characterized in that** the diagnostic procedure (42) comprises the following steps:
- electrically energizing the electric motor in the direction of the release position for a predefined period, and monitoring the sensor with regard to changes in position;
- if the release position is not reached, transmitting a fault signal to the motor vehicle and activating the motor until the fixing position is reached; in the process, monitoring the sensor with regard to changes in position;
- if the fixing position is not reached, transmitting a second fault signal to the motor vehicle.

11. The method as claimed in claim 9 or 10, **characterized in that** the sensor comprises a position sensor (28) and/or at least one limit switch (48).

12. The method as claimed in claim 11, **characterized in that** the position sensor (28) comprises a potentiometer with a total resistance, wherein the lever (23) comprises a slider (33) which is movable with the lever (23) and which, by means of a sliding contact, mechanically divides the electrically fixed total resistance into two partial resistances that correspond to said total resistance.

13. The method as claimed in claim 12, **characterized in that** the slider (33) is arranged on an end of the lever (23) remote from the clamping bolt and comprises a movement travel which extends at least from a fixing position of the clamping bolt (15) into a release position of the clamping bolt (15).

14. The method as claimed in any of claims 9 to 13, **characterized in that** the stroke-generating mechanism (16) comprises two stroke-generating disks (24, 25), wherein a first stroke-generating disk (24) is connected rotationally conjointly to the clamping bolt (15) and a second stroke-generating disk (25) is guided on the clamping bolt (15) in axially displaceable fashion in the housing, and wherein the housing is mounted in floating fashion on the second stroke-generating disk (25).

## Revendications

1. Colonne de direction (1) pour un véhicule automobile, laquelle est réglable dans sa direction longitudinale (12) et/ou dans sa direction verticale (11), comportant
- un tube d'enveloppe (5) qui supporte de manière rotative un arbre de direction (2),
- un étrier de guidage (6) qui peut être relié directement ou indirectement à la carrosserie du véhicule automobile et comprend deux joues latérales (18, 19) entre lesquelles le tube d'enveloppe (5) est disposé,
- un dispositif de fixation (13) électromécanique, dans la position de libération duquel le tube d'enveloppe (5) est réglable par rapport à l'étrier de guidage (6) dans la direction longitudinale (12) et/ou dans la direction verticale (11) de la colonne de direction (1) et dans la position de fixation duquel la position réglée du tube d'enveloppe (5) par rapport à l'étrier de guidage (6) est fixée, le dispositif de fixation (13) comportant
- un boulon de serrage (15) qui traverse les joues latérales (18, 19) de l'étrier de guidage (6) et peut tourner autour de son axe au moyen d'un moteur électrique (17) lors de l'ouverture et de la fermeture du dispositif de fixation (13), et
- un mécanisme de course (16) ainsi qu'un palier de support, les joues latérales (18, 19) de l'étrier de guidage (6) et le tube d'enveloppe (5) étant disposés entre le mécanisme de course (16) et le palier de support, le moteur électrique (17) agissant sur le boulon de serrage (15) au moyen d'un levier (23) monté pivotant, **caractérisée en ce qu'**un capteur (28, 48) est prévu, lequel est conçu pour détecter une position du levier (23), le capteur comportant un potentiomètre comme capteur de position (28), lequel détecte la position du levier (23) le long d'un trajet de levier par rapport à une position de référence et/ou le capteur comportant au moins un interrupteur de fin de course (48) qui détecte quand le levier (23) a atteint une position déterminée en tant qu'objet en mouvement.

2. Colonne de direction selon la revendication 1, **caractérisée en ce que** le potentiomètre présente une résistance totale et le levier (23) comprend un curseur (33) mobile avec le levier (23) le long d'un trajet de déplacement, lequel curseur, par un contact glissant, divise mécaniquement la résistance totale électriquement fixe en deux résistances partielles correspondant à cette résistance totale.

3. Colonne de direction selon la revendication 2, **caractérisée en ce que** le curseur (33) est disposé à une extrémité du levier (23) éloignée du boulon de serrage et présente un trajet de déplacement qui s'étend au moins d'une position de fixation du boulon de serrage (15) à une position de libération du boulon de serrage (15).

4. Colonne de direction selon l'une des revendications précédentes, **caractérisée en ce que** l'au moins un interrupteur de fin de course (48) comprend une barrière lumineuse, une position du levier (23) étant détectée par interruption de la barrière lumineuse.

5. Colonne de direction selon l'une des revendications précédentes, **caractérisée en ce que** le mécanisme de course (16) comprend deux disques à cames (24, 25), un premier disque à cames (24) étant relié de manière solidaire en rotation au boulon de serrage (15) et un deuxième disque à cames (25) étant guidé sur le boulon de serrage (15) de manière axialement mobile dans le boîtier, et le boîtier étant monté flottant sur le deuxième disque à cames (25).

6. Colonne de direction selon l'une des revendications précédentes, **caractérisée en ce qu'**un arbre de rotor (21) du moteur électrique (18) est relié de manière solidaire en rotation à une vis sans fin (22), la vis sans fin (22) s'engrenant avec une roue hélicoïdale (23) qui est reliée de manière solidaire en rotation au premier disque à cames (24).

7. Colonne de direction selon l'une des revendications 1 à 5, **caractérisée en ce qu'**un arbre de rotor (20) du moteur électrique (18) comprend une broche filetée (21) qui est en prise avec un écrou de broche (22), l'écrou de broche (22) étant relié de manière solidaire en rotation au boulon de serrage (15) par le biais du levier (23) .

8. Colonne de direction selon l'une des revendications précédentes, **caractérisée en ce que** les deux disques à cames (24, 25) coopèrent en tant que transmission de course avec le palier de support pour produire une course de serrage pour la position de fixation du dispositif de fixation (13).

9. Procédé de réglage d'une position d'une colonne de direction dans un véhicule automobile, la colonne de direction comportant
- un tube d'enveloppe (5) qui loge de manière rotative un arbre de direction (2),
- un étrier de guidage (6) qui peut être relié directement ou indirectement à la carrosserie du véhicule automobile et comprend deux joues latérales (19, 20) entre lesquelles le tube d'enveloppe (5) est disposé,
- un dispositif de fixation (13) électromécanique comportant un dispositif d'actionnement, dans la position de libération duquel le tube d'enveloppe (5) est réglable par rapport à l'étrier de guidage (6) dans la direction longitudinale (12) et/ou dans la direction verticale (11) de la colonne de direction (1) et dans la position de fixation duquel la position réglée du tube d'enveloppe (5) par rapport à l'étrier de guidage (6) est fixée, le dispositif de fixation (13) comportant
- un boulon de serrage (15) qui traverse les joues latérales (18, 19) de l'étrier de guidage (6) et peut tourner autour de son axe au moyen d'un moteur électrique disposé (17) lors de l'ouverture et de la fermeture du dispositif de fixation (13), et
- un mécanisme de course (16) ainsi qu'un palier de support, les joues latérales (18, 19) de l'étrier de guidage (6) et le tube d'enveloppe (5) étant disposés entre le mécanisme de course (16) et le palier de support, le moteur électrique (17) agissant sur le boulon de serrage (15) au moyen d'un levier (23) monté pivotant, et un capteur étant prévu, lequel est conçu pour détecter une position du levier (23), le procédé comportant les étapes suivantes :
- après l'actionnement du mécanisme de fixation au moyen du dispositif d'actionnement pour le réglage d'une position d'une colonne de direction (38, 39), déplacement du dispositif de fixation dans la position de libération au moyen du moteur électrique (40) ; **caractérisé en ce que** le procédé comporte les autres étapes suivantes
- contrôle de l'état du dispositif de fixation au moyen du capteur (41) ; si le contrôle indique que le dispositif de fixation ne se trouve pas dans la position de libération (41'), lancement d'une procédure de diagnostic (42) ; si le contrôle indique que le dispositif de fixation se trouve dans la position de libération, attente d'un actionnement du dispositif d'actionnement pour la fixation de la position de la colonne de direction (43) ;
- si pendant une durée prédéterminée un actionnement pour la fixation de la position de la colonne de direction n'est pas détecté (44), déplacement du dispositif de fixation dans la position de fixation au moyen du moteur électrique (44', 37) ;
- si pendant une durée prédéterminée un actionnement pour la fixation de la position de la colonne de direction est détecté (45), déplacement du dispositif de fixation dans la position de fixation au moyen du moteur électrique (37) ;
- contrôle de l'état du dispositif de fixation au moyen du capteur (46) ; si le contrôle indique que le dispositif de fixation ne se trouve pas dans la position de fixation (46'), lancement d'une procédure de diagnostic (42).

10. Procédé selon la revendication 9, **caractérisé en ce que** la procédure de diagnostic (42) comporte les étapes suivantes :
- alimentation du moteur électrique en courant dans la direction de la position de libération pendant une durée prédéfinie et contrôle du capteur quant à des changements de position ;
- si la position de libération n'est pas atteinte, envoi d'un signal d'erreur au véhicule automobile et activation du moteur jusqu'à ce que la position de fixation soit atteinte ; en l'occurrence contrôle du capteur quant à des changements de position ;
- si la position de fixation n'est pas atteinte, envoi d'un deuxième signal d'erreur au véhicule automobile.

11. Procédé selon la revendication 9 ou 10, **caractérisé en ce que** le capteur comporte un capteur de position (28) et/ou au moins un interrupteur de fin de course (48).

12. Procédé selon la revendication 11, **caractérisé en ce que** le capteur de position (28) comprend un potentiomètre présentant une résistance totale, le levier (23) comprenant un curseur (33) mobile avec le levier (23), lequel curseur, par un contact glissant, divise mécaniquement la résistance totale électriquement fixe en deux résistances partielles correspondant à cette résistance totale.

13. Procédé selon la revendication 12, **caractérisé en ce que** le curseur (33) est disposé à une extrémité du levier (23) éloignée du boulon de serrage et présente un trajet de déplacement qui s'étend au moins d'une position de fixation du boulon de serrage (15) à une position de libération du boulon de serrage (15).

14. Procédé selon l'une des revendications 9 à 13, **caractérisé en ce que** le mécanisme de course (16) comprend deux disques à cames (24, 25), un premier disque à cames (24) étant relié de manière solidaire en rotation au boulon de serrage (15) et un deuxième disque à cames (25) étant guidé sur le boulon de serrage (15) de manière axialement mobile dans le boîtier, et le boîtier étant monté flottant sur le deuxième disque à cames (25).
